# EUROPEAN PATENT APPLICATION

(11) **EP 3 381 872 A1**
(43) Date of publication of application: **03.10.2018**
(21) Application number: 16868589.9
(22) Date of filing: 24.11.2016
(51) Int. Cl.: C03C 3/097, C03C 3/068, C03C 3/155, C03C 21/00, G02B 1/00

(54) **OPTICAL GLASS**

(30) Priority: 24.11.2015 JP 2015229151
(71) Applicant: AGC Inc., Tokyo 100-8405 (JP)
(72) Inventor: AKIBA Shusaku, Tokyo 100-8405 (JP); NAGASHIMA Tatsuo, Tokyo 100-8405 (JP); SAWAMURA Shigeki, Tokyo 100-8405 (JP)
(74) Representative: Müller-Boré & Partner Patentanwälte PartG mbB
(86) International application number: PCT/JP2016/084717
(87) International publication number: WO 2017/090646

(57) **Abstract**

Provided is an optical glass suitable for an imaging lens or the like used for a vehicle-mounted camera exposed to harsh environment, having a high refractive index and high strength. The optical glass has a strengthened layer at a surface layer, and a depth of the strengthened layer is 1 µm or more from a surface of the optical glass, and a refractive index (nd) of the optical glass is 1.73 to 2.10.

## Description

### TECHNICAL FIELD

The present invention relates to an optical glass, and in detail, to an optical glass having a high refractive index and high strength.

### BACKGROUND

Conventionally, a small-sized imaging glass lens with a wide imaging angle of view has been used for purposes such as a vehicle-mounted camera and a robot visual sensor. A high refractive index is required for the imaging glass lens to enable photographing a wide range with a smaller-sized imaging glass lens. The high refractive index is also required for wearable equipment or the like from viewpoints of enabling a wide-angle, high-luminance and high-contrast image, improvement in light-guide properties, easiness in process of diffractive optical elements, and so on.

The imaging glass lens mounted on a vehicle-mounted camera or the like is required to be extremely high strength compared to an imaging lens of a general camera because an automobile and a robot are assumed to move in high-speed or to be used under harsh environment. For example, regarding the vehicle-mounted camera, it is required that damage, erosion, and so on do not occur due to impact and wind pressure in accordance with driving of the automobile, or sand and dust splashed by driving. It is also important that there is less surface deterioration or alteration due to acid precipitation and chemicals such as detergent and wax used for car wash, or the like.

A glass with high strength and high abrasion resistance is demanded also in case of wearable equipment for an optical waveguide, and a glass with diffractive optical elements to be mounted, lenses for glasses as same as the lens for the vehicle-mounted camera, because scenes such that a user accidentally drops down, or fouling such as sebum, sandy dust are wiped off are assumed.

For example, it has been tried to increase the refractive index and the strength, and further to improve acid resistance and water resistance by using a lens glass material for a vehicle-mounted camera having predetermined acid resistance, regarding the vehicle-mounted glass lens (for example, refer to Patent Reference 1).

### PRIOR ART DOCUMENT

### PATENT REFERENCE

Patent Reference 1: JP-A No. 2013-256446

### SUMMARY

### PROBLEMS TO BE SOLVED BY THE INVENTION

However, the sufficiently high refractive index cannot be obtained in the glass lens using the lens glass material for the vehicle-mounted camera. On the other hand, there has been conventionally a problem that the glass is fragile and likely to be broken when the glass has a composition for high-refractive-index. A glass having the composition for high-refractive-index with high strength capable of enduring harsh environment has therefore been demanded.

The present invention is made from the aforementioned viewpoints, and an object thereof is to provide an optical glass which has a high refractive index and high strength.

### MEANS FOR SOLVING THE PROBLEMS

The present invention provides an optical glass having a strengthened layer at a surface layer, where a depth of the strengthened layer is 1 µm or more from a surface of the optical glass, and a refractive index (nd) of the optical glass is 1.73 to 2.10.

In the optical glass of the present invention, it is preferable that in a glass inside of the optical glass, in mass% based on oxides,
Li₂O +Na₂O is 5% or more,
Li₂O + Na₂O + K₂O is 5% to 20%, and
Li₂O / (Li₂O + Na₂O + K₂O) or Na₂O / (Li₂O + Na₂O + K₂O) is 0.20 or more.

In the optical glass of the present invention, it is preferable that the glass inside of the optical glass satisfies the aforementioned relationship among Li₂O, Na₂O and K₂O, and contains, in mass% based on oxides:
Nb₂O₅: 20% to 75%;
SiO₂: 10% to 50%;
TiO₂: 0% to 20%;
ZrO₂: 0% to 20%;
Li₂O: 0% to 20%;
Na₂O: 0% to 20%;
K₂O: 0% to 10%;
BaO: 0% to 20%;
ZnO: 0% to 15% preferably 0% to 10%;
Ln₂O₃: 0% to 50%;
La₂O₃: 0% to 50%;
Y₂O₃: 0% to 20%;
P₂O₅: 0% to 20%; and
B₂O₃. 0% to 20%, and
a crack initiation load (CIL) of the optical glass is 100 gf or more.

In the optical glass of the present invention, it is preferable that the glass inside of the optical glass satisfies the aforementioned relationship among Li₂O, Na₂O and K₂O, and contains, in mass% based on oxides:
La₂O₃: 10% to 70%;
B₂O₃. 10% to 40%;
Nb₂O₅: 0% or more and less than 20%;
SiO₂: 0% to 30%;
TiO₂: 0% to 20%;
ZrO₂: 0% to 20%;
Li₂O: 0% to 20%;
Na₂O: 0% to 20%;
K₂O: 0% to 10%;
CaO: 0% to 20%;
BaO: 0% to 20%;
ZnO: 0% to 40%;
Ln₂O₃: 10% to 70%; and
P₂O₅: 0% to 20%, and
a crack initiation load (CIL) of the optical glass is 40 gf or more.

### EFFECT OF THE INVENTION

According to the present invention, an optical glass which has a high refractive index and high strength can be provided. The optical glass of the present invention has the high refractive index capable of sufficiently corresponding to small-sizing, and the strength capable of sufficiently enduring harsh use environment when it is used for, for example, an imaging lens of a vehicle-mounted camera.

### DETAILED DESCRIPTION

The following describes embodiments of an optical glass of the present invention. The optical glass of the present invention has a strengthened layer with a thickness of 1 µm or more at a surface layer, and has a refractive index (nd) of 1.73 to 2.10. Having the strengthened layer with the thickness of 1 µm or more at the surface layer means that a region with a depth of 1 µm or more from an optical glass surface is formed of the strengthened layer. In the optical glass of the present invention, the strengthened layer and a part other than the strengthened layer (The part other than the strengthened layer indicates a part at an inner side of the glass than the thickness of the strengthened layer (a later-described DOL). In the present invention, it is also called a glass inside.) are formed of the glass.

In the optical glass of the present invention, the refractive index of the strengthened layer and the refractive index of the glass inside are different in a strict sense, but the refractive indexes differ only at the third decimal place, so they are treated as substantially the same in the present invention. Accordingly, the refractive index (nd) of the optical glass of the present invention is in a range of 1.73 to 2.10. Because the refractive index (nd) of the optical glass of the present invention is in the above high range, the optical glass of the present invention is able to photograph a wide range with a small-sized lens when it is used for an imaging glass lens, or the like. The refractive index (nd) is preferably 1.75 or more, and more preferably 1.80 or more. The refractive index (nd) is preferably 2.05 or less, more preferably 2.00 or less, and further preferably 1.90 or less. Note that it is a problem because the glass is likely to be colored when the refractive index (nd) of the optical glass of the present invention exceeds 2.10.

The optical glass of the present invention is obtained by adding the strengthened layer at a region from a surface of an optical glass precursor to a desired depth of 1 µm or more by performing a predetermined treatment (it is also called strengthening) at the surface layer of glass being the optical glass precursor.

There can be cited chemical strengthening (ion-exchange), physical strengthening (air-cooling tempering, or the like), ion implantation, and so on as concrete examples of the predetermined treatment. In the optical glass of the present invention, the optical glass which is chemically strengthened is also called a chemically strengthened optical glass, the optical glass which is physically strengthened is also called a physically strengthened optical glass, and the optical glass which is ion-implanted is also called an ion-implanted optical glass. The strengthened layer of optical glass of the present invention is preferably a chemically strengthened layer. The optical glass of the present invention has the strengthened layer, and thereby, strength of the optical glass is improved.

The optical glass of the present invention is a high-refractive-index glass, and is a high-strength and high-hardness optical glass which is unlikely to be scratched and cracked due to a compressive stress induced on the strengthened layer.

The optical glass of the present invention has sufficient strength as long as the thickness of the strengthened layer is 1 µm or more. The thickness of the strengthened layer is preferably 5 µm or more, more preferably 10 µm or more, and further preferably 20 µm or more. The thickness of the strengthened layer is preferably 500 µm or less in consideration of a refractive-index change of the optical glass. The thickness of the strengthened layer is more preferably 300 µm or less, further preferably 200 µm or less, and the most preferably 100 µm or less.

Note that the thickness of the strengthened layer in the optical glass of the present invention can be measured as a compressive stress layer depth (DOL; depth of layer) by using, for example, a surface stress meter FSM-6000 (manufactured by Orihara Manufacturing Co., Ltd.).

The optical glass of the present invention has the high strength due to the strengthened layer with the thickness of 1 µm or more at the surface layer. As an index of the strength in the optical glass of the present invention, there can be concretely cited unlikeliness of being scratched (scratch resistance) of the optical glass surface. In the optical glass of the present invention, the scratch resistance measured through a scratch test is preferably 200 gf or more, more preferably 300 gf or more, still more preferably 500 gf or more, further preferably 1000 gf or more, and particularly preferably 2000 gf or more. The scratch resistance in the above-stated range enables to extremely improve a mar resistance at the optical glass surface, and to improve the strength of the optical glass.

A value of the scratch resistance can be found by, for example, the following method. A scratch tester equipped with a Knoop indenter (for example, manufactured by SHINTO Scientific Co., Ltd., TriboGear Type 22) is used, a sample obtained by mirror-finishing and strengthening on a glass plate with a thickness of 1 mm is subjected to a scratch test where the Knoop indenter is brought into contact with a sample surface, a predetermined load is applied thereto, and moving in a long edge direction of the Knoop indenter at a scratch rate of 10 mm/sec. A load when chipping occurs is set as the scratch resistance. The sample surface is observed by using a microscope with a magnification of 200 times to check presence or absence of the occurrence of chipping.

Further, a load of a Vickers indenter when an incidence of cracks at a formation time of an indentation by using the Vickers indenter becomes 50% (the load is called a crack initiation load (CIL)) can be used as an index of the strength in the optical glass of the present invention.

The CIL is an index of crack resistance, and the crack is unlikely to occur as the CIL is larger. The CIL of the optical glass of the present invention is preferably 40 gf or more, more preferably 60 gf or more, and further preferably 100 gf or more though it differs depending on a composition of the glass.

The value of the CIL can be found by, for example, the following method. The Vickers indenter is pressed into a surface of a plate-shaped optical glass with a thickness of 2 mm whose both surfaces are mirror-polished and then strengthened by using a Vickers hardness tester for 15 seconds, then the Vickers indenter is removed, and around the indentation is observed after 15 seconds has passed since the Vickers indenter is removed. An average value of the number of occurred cracks with respect to each of indentation loads of the Vickers indenter of 100 gf, 200 gf, 300 gf, 500 gf, 1000 gf, and 2000 gf is calculated by each load. A regression calculation is performed by using a sigmoid function regarding a relationship between the load and the number of cracks, and the load when the number of cracks becomes two can be set as the CIL (gf) of the glass from the regression calculation result. An incidence is regarded as 100% when four cracks in total occur from all of four corners of the indentation.

In the optical glass of the present invention, the compressive stress (CS) of the strengthened layer can be set as an index of the strength of the optical glass. The compressive stress can be measured by using birefringence, and measured by, for example, the surface stress meter FSM-6000 (manufactured by Orihara Manufacturing Co., Ltd.). The compressive stress of the strengthened layer is preferably 50 MPa or more, more preferably 100 MPa or more, and further preferably 150 MPa or more.

The optical glass of the present invention preferably has water resistance (RW) of class 3 or more and acid resistance (RA) of class 3 or more each measured based on "a measuring method (powder method) of chemical durability of an optical glass" (JOGIS06-2008) by Japanese Optical Glass Industrial Standards. In the optical glass of the present invention, the RW and RA of the strengthened layer and the RW and RA of the glass inside are different in a strict sense, but they are treated to be substantially the same in the present invention because there is not a large difference to have different classes.

The RW is concretely measured as follows. A mass decrease rate (%) when glass powder with a diameter of 420 to 600 µm is immersed in 80 mL of pure water at 100°C for one hour is measured. A predetermined class is supplied in accordance with the mass decrease rate. The smaller a numeric value of the class is, the better the RW is. The RW of the optical glass of the present invention is more preferably class 2 or more, and particularly preferably class 1.

The RA is concretely measured as follows. A mass decrease rate (%) when glass powder with a diameter of 420 to 600 µm is immersed in 80 mL of 0.01 normal aqueous solution of nitric acid at 100°C for one hour is measured. A predetermined class is supplied in accordance with the mass decrease rate. The smaller a numeric value of the class is, the better the RA is. The RA of the optical glass of the present invention is more preferably class 2 or more, and particularly preferably class 1.

Transmittance of light at a wavelength of 360 nm (T₃₆₀) of the optical glass of the present invention when it is formed into a glass plate with a thickness of 1 mm is preferably 50% or more. The T₃₆₀ is more preferably 55% or more, and further preferably 60% or more. The T₃₆₀ can be measured by using a spectrophotometer regarding, for example, the glass plate with the thickness of 1 mm. Note that the T₃₆₀ of the strengthened layer and the T₃₆₀ of the glass inside are approximately the same, and they are treated as the same one in the optical glass of the present invention.

A shape of the optical glass of the present invention is not particularly limited. Shapes such as a plate shape, a cylindrical shape, a spherical shape, and so on are appropriately selected according to purposes. When the shape of the optical glass is the plate shape, it may be a flat plate or a curved plate which is bent.

In the optical glass of the present invention, the glass preferably has a specific gravity of 4.0 g/cm³ or less. The specific gravity of the strengthened layer and the specific gravity of the glass inside are approximately equal at the first decimal place in the optical glass of the present invention, and they are treated as the same one. Cracks are thereby unlikely to occur when the glass is formed into the optical glass. Accordingly, there can be obtained the optical glass with high strength where breakage originated from the crack is unlikely to occur. The specific gravity is preferably 3.7 g/cm³ or less, and more preferably 3.5 g/cm³ or less.

In the optical glass of the present invention, the glass preferably has a glass transition point (Tg) of 520°C or more and 600°C or less, and a devitrification temperature of 1300°C or less. In the optical glass of the present invention, the Tg, the devitrification temperature and the T₃₆₀ of the strengthened layer and the Tg, the devitrification temperature and the T₃₆₀ of the glass inside are approximately equal, and they are treated as the same ones. The glass has the Tg of 600°C or less, and thereby, moldability becomes good when, for example, a glass lens is produced through a precise press molding (hereinafter, it is called just "press molding") with high manufacturing efficiency. The Tg is preferably 520°C or more because relaxation of the compressive stress is likely to occur in the optical glass having the strengthened layer when the Tg is too low. The Tg of the glass is preferably 540 to 590°C. The Tg can be measured by, for example, a thermal expansion method.

In the present invention, Young's modulus means the Young's modulus of the glass inside. The Young's modulus is preferably 85 GPa or more, more preferably 90 GPa or more, further preferably 95 GPa or more, and still further preferably 100 GPa or more.

In the optical glass of the present invention, when the devitrification temperature of the glass is 1300°C or less, devitrification of the glass at the press molding time can be sufficiently suppressed, and the press-moldability becomes good. The devitrification temperature of the glass is preferably 1250°C or less, further preferably 1200°C or less, and particularly preferably 1100°C or less. Here, the devitrification temperature is a maximum value of a temperature where no crystal with a size of 1 µm or more in a long edge or a major axis is found at a surface and an inside of the glass when heated and melted glass is left standing to cool naturally.

As the optical glass of the present invention, there can be cited Nb₂O₅-SiO₂ based glass (in particular, Nb₂O₅-SiO₂-TiO₂ based glass, Nb₂O₅-SiO₂-ZrO₂ based glass, and so on), La₂O₃-B₂O₃ based glass, BaO-SiO₂ based glass, and so on. In this description, the Nb₂O₅-SiO₂ based glass means glass whose essential components are Nb₂O₅ and SiO₂. Other notations of"... based glass" also have similar meaning.

In view of chemical strengthening, the glass inside preferably contains Li₂O, Na₂O and K₂O as alkali metal components such that all of the following requirements (i), (ii) and (iii) in mass% based on oxides are satisfied.
(i) Li₂O +Na₂O is 5% or more.
(ii) Li₂O + Na₂O + K₂O is 5% to 20%.
(iii) Li₂O / (Li₂O + Na₂O + K₂O) or Na₂O / (Li₂O + Na₂O + K₂O) is 0.20 or more.

The following describes each requirement.

### (Requirement (i))

Generally, an ion-exchange treatment in glass is a treatment where an alkali ion with a small ionic radius is exchanged into an alkali ion with a large ionic radius. The ionic radii of the alkali ions are larger in an order of Li⁺, Na+ and K⁺. Li⁺ is exchanged into Na⁺ or K⁺, or Na⁺ is exchanged into K⁺ in the ion exchange treatment. The glass inside contains Li₂O or Na₂O so as to enable the ion-exchange treatment, and a total content thereof (Li₂O + Na₂O) is 5% or more. Li₂O +Na₂O is preferably 7% or more, and more preferably 10% or more. Li₂O +Na₂O at the glass inside is preferably 30% or less, more preferably 25% or less, and further preferably 20% or less in view of suppressing the devitrification and a stress relaxation in the chemically strengthened glass due to the lowering of the Tg.

### (Requirement (ii))

At the glass inside, a total content of the alkali metal components (Li₂O + Na₂O + K₂O) is 5% to 20%. The Tg can be lowered by setting Li₂O +Na₂O + K₂O to be 5% or more. When Li₂O + Na₂O + K₂O exceeds 20%, viscosity is likely to decrease, and the press-moldability decreases. On the other hand, when Li₂O + Na₂O + K₂O is less than 5%, the viscosity is likely to decrease, and the press-moldability decreases. Li₂O + Na₂O + K₂O is preferably 6% or more, more preferably 7% or more, and further preferably 8% or more. Li₂O +Na₂O + K₂O is preferably 17% or less, and more preferably 14% or less.

### (Requirement (iii))

At the glass inside, the requirement (iii) is that Li₂O / (Li₂O +Na₂O +K₂O) is 0.20 or more (hereinafter, it is also called a requirement (iii-1)), or Na₂O / (Li₂O + Na₂O + K₂O) is 0.20 or more (hereinafter, it is also called a requirement (iii-2)). Either one of the requirement (iii-1) and the requirement (iii-2) may be satisfied, or both of them may be satisfied.

Among the alkali metal components, Li₂O and Na₂O are components improving the strength of the glass and they are desired to be contained a lot. However, the devitrification is likely to occur when the content of Li₂O is large. The requirement (iii-1) is therefore defined to suppress the devitrification due to increase in Li₂O and to thereby secure the high strength by containing a predetermined ratio of K₂O having high devitrification suppression effect, together with Li₂O. Besides, an ion-exchange rate becomes insufficient when the content of Na₂O is large. The requirement (iii-2) is therefore defined to suppress the insufficient ion exchange due to increase in Na₂O and to thereby secure the high strength by containing a predetermined ratio of K₂O having high ion exchange property improvement effect, together with Na₂O.

Mechanical properties of the glass become good where crack resistance, scratch resistance after chemical strengthening are improved by satisfying the requirements (i), (ii), and the requirement (iii-1). Li₂O / (Li₂O +Na₂O + K₂O) is preferably 0.30 or more, more preferably 0.40 or more, and the most preferably 0.50 or more. On the other hand, when Li₂O / (Li₂O + Na₂O + K₂O) is too large, the viscosity is likely to decrease, and the press moldability decreases. Li₂O / (Li₂O +Na₂O + K₂O) is preferably 1.0 or less, more preferably 0.9 or less, further preferably 0.8 or less, particularly preferably 0.7 or less, and the most preferably 0.6 or less.

Mechanical properties of the glass become good where the crack resistance, the scratch resistance after the chemical strengthening are improved by satisfying the requirements (i), (ii), and the requirement (iii-2). Na₂O / (Li₂O + Na₂O + K₂O) is preferably 0.30 or more, more preferably 0.40 or more, and the most preferably 0.50 or more. On the other hand, when Na₂O / (Li₂O + Na₂O + K₂O) is too large, the ion exchange rate decreases. Na₂O / (Li₂O +Na₂O + K₂O) is preferably 1.0 or less, more preferably 0.9 or less, and further preferably 0.8 or less.

It is preferable that the optical glass of the present invention is the Nb₂O₅-SiO₂ based glass or the La₂O₃-B₂O₃ based glass so that the content of the alkali metal components satisfies all of the requirements (i), (ii) and (iii) in order to enable the ion-exchange treatment, and the high refractive index is secured.

When the optical glass of the present invention is the Nb₂O₅-SiO₂ based glass, as a composition of the glass inside, there can be concretely cited a composition (the glass having the composition is hereinafter called a "first glass") satisfying all of the requirements (i), (ii) and (iii) regarding the alkali metal component contents, and containing, in mass% based on oxides:
Nb₂O₅: 20% to 75%,
SiO₂: 10% to 50%,
TiO₂: 0% to 20%,
ZrO₂: 0% to 20%,
Li₂O: 0% to 20%,
Na₂O: 0% to 20%,
K₂O: 0% to 10%,
BaO: 0% to 20%,
ZnO: 0% to 15%, preferably 0% to 10%,
Ln₂O₃: 0% to 50%,
La₂O₃: 0% to 50%,
Y₂O₃: 0% to 20%,
P₂O₅: 0% to 20%, and
B₂O₃. 0% to 20%.

When the optical glass of the present invention is the La₂O₃-B₂O₃ based glass, as a composition of the glass inside, there can be concretely cited a composition (the glass having the composition is hereinafter called a "second glass") satisfying all of the requirements (i), (ii) and (iii) regarding the alkali metal component contents, and containing, in mass% based on oxides:
La₂O₃: 10% to 70%,
B₂O₃. 10% to 40%,
Nb₂O₅: 0% or more and less than 20%,
SiO₂: 0% to 30%,
TiO₂: 0% to 20%,
ZrO₂: 0% to 20%,
Li₂O: 0% to 20%,
Na₂O: 0% to 20%,
K₂O: 0% to 10%,
CaO: 0% to 20%,
BaO: 0% to 20%,
ZnO: 0% to 40%,
Ln₂O₃: 10% to 70%, and
P₂O₅: 0% to 20%.

The following describes the first glass and the second glass. The optical glass of the present invention is not limited to the compositions of the first glass and the second glass as long as the aforementioned properties are held. In the first glass and the second glass, "substantially not contained" means that the component is not contained except for inevitable impurities. A content of inevitable impurities is 0.1% or less in the present invention.

### <First glass>

The following describes the composition in the first glass. Nb₂O₅ is a component increasing a refractive index of the glass, and enlarging dispersion of the glass. A content of Nb₂O₅ is 20% or more and 75% or less. When the content of Nb₂O₅ is 20% or more, the high refractive index can be obtained. The contentn of Nb₂O₅ is preferably 30% or more, more preferably 40% or more, and further preferably 45% or more. When Nb₂O₅ is contained too much, devitrification is likely to occur. Accordingly, the content of Nb₂O₅ is preferably 70% or less, more preferably 65% or less, and further preferably 60% or less.

SiO₂ is a glass network former, and is a component increasing the strength and the crack resistance to the glass, and improving stability and chemical durability of the glass. A content of SiO₂ is 10% or more and 50% or less. When the content of SiO₂ is 10% or more, the crack resistance can be improved. On the other hand, when the content of SiO₂ is 50% or less, the high refractive index can be obtained. The content of SiO₂ is preferably 20% or more, more preferably 25% or more, and further preferably 28% or more. The content of SiO₂ is preferably 45% or less, more preferably 40% or less, and further preferably 35% or less.

TiO₂ is an optional component, and is a component increasing the refractive index of the glass, and enlarging the dispersion of the glass. When the first glass contains TiO₂, the crack resistance can be improved. On the other hand, when an amount of TiO₂ is too much, the glass is likely to be colored and transmittance is lowered. Accordingly, a content thereof is 20% or less. When the first glass contains TiO₂, the content is preferably 0.5% or more, more preferably 1% or more, and further preferably 1.5% or more. The content of TiO₂ is preferably 6% or less, more preferably 5.5% or less, and further preferably 5% or less.

ZrO₂ is an optional component, and is a component increasing the refractive index of the glass and increasing chemical durability of the glass. When the first glass contains ZrO₂, the crack resistance can be improved. On the other hand, when an amount of ZrO₂ is too much, the devitrification is likely to occur. Accordingly, a content of ZrO₂ is 20% or less. When the first glass contains ZrO₂, the content is preferably 1% or more, more preferably 2% or more, and further preferably 3% or more. The content of ZrO₂ is preferably 15% or less, more preferably 10% or less, and further preferably 8% or less.

Li₂O is a component improving the strength of the glass, securing the low Tg, and improving glass melting. A content of Li₂O is 20% or less. When Li₂O is contained, the crack resistance (CIL) can be improved. On the other hand, when an amount of Li₂O is too much, the devitrification is likely to occur. The content of Li₂O is preferably 2% or more, more preferably 3% or more, and further preferably 4% or more. The content of Li₂O is preferably 15% or less, more preferably 13% or less, and further preferably 10% or less.

Na₂O is a component suppressing the devitrification and lowering the Tg. A content of Na₂O is 20% or less. When an amount of Na₂O is too much, the strength and the crack resistance are likely to be lowered. The content of Na₂O is preferably 1.5% or more, more preferably 2% or more, and further preferably 2.5% or more. The content of Na₂O is preferably 15% or less, more preferably 10% or less, and further preferably 7% or less.

K₂O is a component improving the glass melting and suppressing the devitrification. A content of K₂O is 10% or less. When an amount of K₂O is too much, the strength and the crack resistance are likely to be lowered. The content of K₂O is preferably 0.3% or more, more preferably 0.5% or more, and further preferably 1% or more. The content of K₂O is preferably 7% or less, more preferably 5% or less, and further preferably 3% or less.

A relationship of the contents of the alkali metal components (Li₂O, Na₂O and K₂O) in the first glass is as described above. In the first glass, the contents of the alkali metal components are preferably Li₂O > Na₂O > K₂O in view of increasing the strength. Similarly, Li⁺ / Na⁺ is preferably 1.2 or more in mass ratio in view of increasing the strength.

ZnO is an optional component, and is a component improving the mechanical properties such as the strength and the crack resistance of the glass. On the other hand, when an amount of ZnO is large, the devitrification is likely to occur. Accordingly, a content of ZnO is 15% or less. The content of ZnO is preferably 13% or less, more preferably 10% or less, further preferably 8% or less, 6% or less, further more preferably 5% or less, 4% or less, 3% or less, and particularly preferably 1% or less. ZnO is the most preferably substantially not contained.

P₂O₅ is an optional component. P₂O₅ is a component lowering the Tg, and adjusting an Abbe number. However, when an amount of P₂O₅ is large, the crack resistance is likely to be lowered. Accordingly, a content of P₂O₅ is 20% or less. The content of P₂O₅ is preferably 4% or less, more preferably 3% or less, further preferably 2% or less, and particularly preferably 1% or less. P₂O₅ is the most preferably substantially not contained.

B₂O₃ is an optional component. B₂O₃ is a component lowering the Tg, and improving the mechanical properties such as the strength and the crack resistance of the glass. However, when an amount of B₂O₃ is large, the refractive index is likely to be lowered. Accordingly, a content of B₂O₃ is 20% or less. The content of B₂O₃ is preferably 5% or less, more preferably 4% or less, further preferably 3% or less, and particularly preferably 1% or less. B₂O₃ is the most preferably substantially not contained.

La₂O₃ is an optional component. La₂O₃ is a component increasing the refractive index of the glass. However, when an amount of La₂O₃ is too much, the mechanical properties are lowered. Accordingly, a content of La₂O₃ is 50% or less when it is contained. The content of La₂O₃ is preferably 5% or less, more preferably 3% or less, further preferably 2% or less, and particularly preferably 1% or less. La₂O₃ is the most preferably substantially not contained.

BaO is an optional component. BaO is a component suppressing the devitrification, and when an amount of BaO is large, the crack resistance is likely to be lowered. Accordingly, a content of BaO is 20% or less when it is contained. The content of BaO is preferably 4% or less, more preferably 2% or less, and further preferably 1% or less. BaO is the most preferably substantially not contained.

CaO is an optional component. CaO is a component suppressing the devitrification, and when an amount of CaO is large, the crack resistance is likely to be lowered. Accordingly, a content of CaO is preferably 5% or less, more preferably 3% or less, further preferably 2% or less, and particularly preferably 1% or less when it is contained. CaO is the most preferably substantially not contained.

Y₂O₃ is an optional component. Y₂O₃ is a component increasing the refractive index of the glass, and improving the strength and the crack resistance. On the other hand, when an amount of Y₂O₃ is large, the dispersion of the glass is lowered, and the devitrification is likely to occur. Accordingly, a content of Y₂O₃ is 20% or less when it is contained. The content of Y₂O₃ is preferably 10% or less, more preferably 5% or less, further preferably 3% or less, and particularly preferably 1% or less.

Gd₂O₃ is an optional component. Gd₂O₃ is a component increasing the refractive index of the glass, and improving the strength and the crack resistance. On the other hand, when an amount of Gd₂O₃ is large, the dispersion of the glass is lowered, and the devitrification is likely to occur. Accordingly, Gd₂O₃ is preferably substantially not contained.

Ln₂O₃ (where Ln is one or more selected from the group consisting of Y, La, Gd, Yb and Lu) improves the refractive index of the glass. On the other hand, when an amount of Ln₂O₃ is large, the dispersion of the glass is lowered, and the devitrification is likely to occur. Accordingly, a content of Ln₂O₃ is 50% or less in total, preferably 15% or less, more preferably 10% or less, 7% or less, further 5% or less, further preferably 3% or less, particularly preferably 1% or less, and the most preferably substantially not contained.

Al₂O₃ is an optional component. Al₂O₃ is a component improving the chemical durability. However, when an amount of Al₂O₃ is large, the glass is likely to be devitrified. Accordingly, Al₂O₃ is preferably substantially not contained.

WO₃ is an optional component. When a small amount of WO₃ is contained, the devitrification of the glass is suppressed, and when the amount of WO₃ is too much, the glass is conversely likely to be devitrified. Accordingly, a content of WO₃ is preferably 10% or less, more preferably 7% or less, further preferably 5% or less, still further preferably 3% or less, yet further more preferably 1% or less, and particularly preferably substantially not contained.

Bi₂O₃ is an optional component. Bi₂O₃ is a component increasing the refractive index of the glass, lowering the Tg, and reducing the devitrification of the glass. On the other hand, when an amount of Bi₂O₃ is large, the glass is likely to be colored. Accordingly, Bi₂O₃ is preferably substantially not contained.

MgO is an optional component. MgO is a component improving the glass melting, suppressing the devitrification, and adjusting optical constants such as Abbe number and the refractive index of the glass. On the other hand, when an amount of MgO is large, the devitrification is conversely accelerated. Accordingly, MgO is preferably substantially not contained.

SrO is an optional component. SrO is a component improving the glass melting, suppressing the devitrification, and adjusting the optical constants of the glass. On the other hand, when an amount of SrO is large, the devitrification is conversely accelerated. Accordingly, SrO is preferably substantially not contained.

Since As₂O₃ is a noxious chemical substance, there is a tendency to refrain from using As₂O₃ in recent years, and environmental measures are required to be taken. Accordingly, As₂O₃ is preferably substantially not contained except for inevitable mixing when environmental effects are emphasized.

In the first glass, it is preferable that at least one of Sb₂O₃ and SnO₂ is further contained. They are not essential components, and can be added for the purposes of adjustment of refractive-index properties, improvement in glass melting, suppression of coloring, improvement in transmittance, clarifying, improvement in chemical durability, and so on. When these components are contained, a content is preferably 1% or less in total, and more preferably 0.5% or less.

It is preferable that F is further contained in the first glass. F is not essential, and can be added for the purposes of improvement in glass melting, improvement in transmittance, improvement in clarifying, and so on. When F is contained, a content is preferably 5% or less, and more preferably 3% or less.

In the first glass, when the total content of the alkali metal components (Li₂O + Na₂O + K₂O) is large, the Tg is lowered and the refractive index is likely to be lowered. The refractive index can be further increased while keeping the Tg low by making Nb₂O₅ which contributes to improvement in the strength contain for a predetermined amount or more with respect to a total amount of La₂O₃ and BaO, from among Nb₂O₅, La₂O₃, and BaO being components increasing the refractive index. Accordingly, Nb₂O₅-(La₂O₃ + BaO) is preferably 30% or more. On the other hand, when Nb₂O₅ - (La₂O₃ + BaO) is too much, the specific gravity becomes large, and therefore, it is preferably 75% or less. Nb₂O₅ - (La₂O₃ + BaO) is more preferably 40% or more, further preferably 45% or more, and particularly preferably 50% or more from points of reducing the specific gravity and obtaining the high refractive index.

In the first glass, a value in mass% based on oxides of (Nb₂O₅ - (La₂O₃ + BaO)) × Li₂O / (Li₂O + Na₂O + K₂O) is preferably 20 or more. As stated above, (Nb₂O₅ - (La₂O₃ + BaO)) is an index to obtain the high refractive index and the high strength, and (Li₂O + Na₂O + K₂O) is an index to lower the Tg. When (Nb₂O₅ - (La₂O₃ + BaO)) × Li₂O / (Li₂O + Na₂O + K₂O) is 20 or more, the optical glass having the high refractive index and the high strength, and the lower Tg can be obtained. (Nb₂O₅ - (La₂O₃ + BaO)) × Li₂O / (Li₂O + Na₂O + K₂O) is more preferably 25 or more, and further preferably 30 or more.

In case of the first glass, the CIL is 100 gf or more, preferably 150 gf or more, and more preferably 200 gf or more in either of later-described chemical strengthening conditions 1 to 4.

### <Second glass>

The following describes the composition in the second glass. La₂O₃ is an essential component increasing the refractive index of the glass. However, when an amount of La₂O₃ is too much, the mechanical properties are lowered. Accordingly, a content of La₂O₃ is 10% or more and 70% or less. When the content of La₂O₃ is 10% or more, the high refractive index and the Abbe number can be obtained. The content of La₂O₃ is preferably 20% or more, more preferably 30% or more, and further preferably 40% or more. The content of La₂O₃ is preferably 60% or less, more preferably 55% or less, and further preferably 45% or less.

B₂O₃ is an essential component lowering the Tg, and improving the mechanical properties such as the strength and the crack resistance of the glass. However, when an amount of B₂O₃ is large, the refractive index is likely to be lowered. Accordingly, a content of B₂O₃ is 10% or more and 40% or less. The content of B₂O₃ is preferably 13% or more, more preferably 15% or more, and further preferably 20% or more. The content of B₂O₃ is preferably 35% or less, more preferably 30% or less, and further preferably 25% or less.

Nb₂O₅ is an optional component, and is a component increasing the refractive index of the glass, and enlarging the dispersion of the glass. When Nb₂O₅ is contained too much, devitrification is likely to occur. Accordingly, a content of Nb₂O₅ is less than 20%. When the second glass contains Nb₂O₅, the content is preferably 0.1% or more, and more preferably 0.2% or more. The content of Nb₂O₅ is preferably 10% or less, and more preferably 5% or less.

SiO₂ is an optional component, and is a component increasing the strength and the crack resistance to the glass, and improving the stability and the chemical durability of the glass. A content of SiO₂ is 30% or less because the refractive index is lowered if it is contained too much. When the second glass contains SiO₂, the content is preferably 10% or more, and more preferably 15% or more. The content of SiO₂ is preferably 25% or less, and more preferably 20% or less.

TiO₂ is an optional component, and is a component increasing the refractive index of the glass, and enlarging the dispersion of the glass. When the second glass contains TiO₂, the crack resistance can be improved. On the other hand, when an amount of TiO₂ is too much, the glass is likely to be colored and transmittance is lowered. Accordingly, a content of TiO₂ is 20% or less. When the second glass contains TiO₂, the content is preferably 0.1% or more, more preferably 0.2% or more, and further preferably 0.3% or more. The content of TiO₂ is preferably 15% or less, more preferably 13% or less, and further preferably 10% or less.

ZrO₂ is an optional component, and is a component increasing the refractive index of the glass and increasing the chemical durability of the glass. When the second glass contains ZrO₂, the crack resistance can be improved. On the other hand, when an amount of ZrO₂ is too much, the devitrification is likely to occur. Accordingly, a content of ZrO₂ is 20% or less. When the second glass contains ZrO₂, the content is preferably 0.1% or more, more preferably 0.2% or more, and further preferably 0.3% or more. The content of ZrO₂ is preferably 15% or less, more preferably 13% or less, and further preferably 10% or less.

P₂O₅ is an optional component. P₂O₅ is a component lowering the Tg, and adjusting the Abbe number. However, when an amount of P₂O₅ is large, the crack resistance is likely to be lowered. Accordingly, a content of P₂O₅ is 20% or less. When the second glass contains P₂O₅, the content is preferably 0.2% or more, more preferably 0.3% or more, and further preferably 0.5% or more. The content of P₂O₅ is preferably 15% or less, more preferably 13% or less, 10% or less, further 5% or less, still further 3% or less, and further preferably 1% or less.

The second glass contains the alkali metal components (Li₂O, Na₂O and K₂O). Contents of the alkali metal components (Li₂O, Na₂O and K₂O) and a relationship thereof in the second glass are the same as the first glass including a preferred mode.

CaO is an optional component. CaO is a component suppressing the devitrification, and when an amount of CaO is large, the crack resistance is likely to be lowered. Accordingly, a content of CaO is 20% or less. When the second glass contains CaO, the content is preferably 1% or more, and more preferably 2% or more. The content of CaO is preferably 10% or less, and more preferably 5% or less. When the crack resistance is particularly considered, the content of CaO is further preferably 3% or less, and still further preferably 1% or less.

BaO is an optional component. BaO is a component suppressing the devitrification, and when an amount of BaO is large, the crack resistance is likely to be lowered. Accordingly, a content of BaO is 20% or less. When the second glass contains BaO, the content is preferably 1% or more, and more preferably 2% or more. The content of BaO is preferably 10% or less, and more preferably 5% or less. When the crack resistance is particularly considered, the content of BaO is further preferably 3% or less, and still further preferably 1% or less.

ZnO is an optional component, and is a component improving the mechanical properties such as the strength and the crack resistance of the glass. On the other hand, when an amount of ZnO is large, the devitrification is likely to occur. Accordingly, a content of ZnO is 40% or less. When the second glass contains ZnO, the content is preferably 5% or more, more preferably 10% or more, and further preferably 15% or more. The content of ZnO is preferably 30% or less, more preferably 25% or less, and further preferably 20% or less. When the devitrification property is particularly considered, the content of ZnO is 10% or less, further 5% or less, still further 3% or less, and yet further preferably 1% or less.

The second glass may contain Y₂O₃, Gd₂O₃ as optional components as same as the first glass. In the second glass, Ln₂O₃ (where Ln is one or more selected from the group consisting of Y, La, Gd, Yb and Lu) is an essential component increasing the refractive index of the glass. On the other hand, when an amount of Ln₂O₃ is large, the dispersion of the glass is lowered, and the devitrification is likely to occur. Accordingly, a content of Ln₂O₃ can be set similar to the content of La₂O₃ including a preferred mode.

In the second glass, (Li₂O + Na₂O + K₂O) / Ln₂O₃ indicating a ratio of a total content of the alkali metal components with respect to Ln₂O₃ is preferably 0.2 or more. When the ratio is 0.2 or more, a sufficient ion-exchange property can be obtained. (Li₂O + Na₂O + K₂O) / Ln₂O₃ is more preferably 0.3 or more. (Li₂O + Na₂O + K₂O) / Ln₂O₃ is preferably 1.0 or less in view of obtaining a sufficiently high strain point.

Al₂O₃ is an optional component. Al₂O₃ is a component improving the chemical durability. However, when an amount of Al₂O₃ is large, the glass is likely to be devitrified. Accordingly, Al₂O₃ is preferably substantially not contained.

Since As₂O₃ is a noxious chemical substance, there is a tendency to refrain from using As₂O₃ in recent years, and environmental measures are required to be taken. Accordingly, As₂O₃ is preferably substantially not contained except for inevitable mixing when environmental effects are emphasized.

The second glass may contain components such as WO₃, Bi₂O₃, MgO, SrO, Sb₂O₃, SnO₂, F and the like in addition to the aforementioned components similar to the first glass. Contents of these components can be set as same as the first glass including preferred modes.

In case of the second glass, the CIL is 40 gf or more, preferably 50 gf or more, and more preferably 60 gf or more in either of later-described chemical strengthening conditions 1 to 4.

The optical glass of the present invention can be manufactured through a method including, for example, the following process A and process B.

### Process A (Fabrication process of optical glass precursor)

An optical glass precursor can be obtained by, for example, glass raw materials are prepared such that a composition of the obtained glass becomes the aforementioned composition in mass% based on oxides, and melting and cooling the glass raw materials through conventional method. Generally, the cooling is performed after molded into a desired shape after the melting. A glass made into a different shape at the cooling time may further made into a desired shape by further molding. The molding method is appropriately selected depending on purposes, shapes, and so on of the optical glass precursor.

For example, when an optical element such as a lens is fabricated, raw materials are weighted to be the above-described predetermined glass composition, and they are uniformly mixed. The fabricated mixture is put into a platinum crucible, a quartz crucible or an alumina crucible to be roughly melted. After that, the resultant is put into a gold crucible, the platinum crucible, a platinum alloy crucible, or an iridium crucible to be melted at a temperature range of 1200 to 1400°C for 2 to 10 hours, it is homogenized by stirring, fining and clarifying, and thereafter, it is casted into a metal mold, annealed, to thereby fabricate the optical glass precursor, further a preform to be the optical glass precursor by molding.

The optical glass precursor can be fabricated by using means such as, for example, a reheat press molding and a precise press molding for the fabricated preform. That is, a preform for a mold-press molding is fabricated through the melting and cooling of the glass raw materials, this preform is subjected to polishing after the reheat press molding to thereby fabricate the optical glass precursor, or for example, the preform fabricated by polishing is subjected to the precise press molding to fabricate the optical glass precursor. Means to fabricate the optical glass precursor are not limited to these means.

### Process B (Process adding strengthened layer with thickness of 1 µm or more by processing surface layer of optical glass precursor)

There can be cited the chemical strengthening (ion-exchange), the physical strengthening (air-cooling tempering, or the like), the ion implantation, and so on as kinds of treatments of the surface layer of the fabricated optical glass precursor as described above. The following describes an example of the ion-exchange treatment being a preferable treatment in the present invention, that is, the chemical strengthening treatment.

The chemical strengthening treatment can be performed through a conventionally publicly-known method. Concretely, the optical glass precursor is brought into contact with molten of alkali metal salts containing alkali metal ions each having a larger ion radium compared to the alkali metal ion in the optical glass precursor by means of immersion or the like. The metal ions each having a smaller ion radius are exchanged by the metal ions each having a larger ion radius only at the surface layer of the optical glass precursor, and the optical glass of the present invention where the compressive stress is induced on the surface layer can be obtained.

### (Mixed molten salt)

A mixed molten salt having, for example, a composition described below can be used as the molten of the alkali metal salt used for the chemical strengthening treatment. A content of each component is displayed by a percent by mass with respect to a total amount of the mixed molten salt unless otherwise specified.

### (1) Lithium nitrate

When lithium nitrate is contained over 6%, there is a possibility that Na and K in the optical glass precursor are accelerated to be exchanged with Li, and the optical glass precursor is unlikely to be strengthened. In addition, the surface layer of the optical glass precursor becomes not a compressive layer but a tensile layer, and there is a possibility that the surface layer has smaller strength than the optical glass precursor. Accordingly, a content of lithium nitrate is preferably 5% or less, more preferably 4% or less, and further preferably 3% or less.

### (2) Sodium nitrate

Sodium nitrate is a component to enable main strengthening by the ion-exchange of Na⁺ in the mixed molten salt with Li in the optical glass precursor, when the optical glass precursor containing Li, for example, the optical glass precursor formed of the aforementioned glass is chemically strengthened, and is an essential component. A content of sodium nitrate in the mixed molten salt is preferably 28% or more, and more preferably 30% or more. When the optical glass precursor which does not contain Li is subjected to the chemical strengthening, the compressive stress becomes insufficient when sodium nitrate is contained too much. Accordingly, in that case the content of sodium nitrate is 30% or less, preferably 20% or less, and more preferably 10% or less.

### (3) Potassium nitrate

Potassium nitrate is not a major strengthening ion because a rate where K⁺ in the mixed molten salt is ion-exchanged with Li and Na in the glass is slower compared to the ion-exchange between Li and Na. Potassium nitrate is an essential component because potassium nitrate lowers a melting point of the mixed molten salt by freezing-point depression, and there is no fear that the strengthening is unlikely to be enabled when the content is too much such as lithium nitrate. The content of potassium nitrate in the mixed molten salt is preferably 10% or more, and more preferably 20% or more. When the optical glass precursor containing Li is chemically strengthened, the content of potassium nitrate is preferably 90% or less, or 80% or less.

The mixed molten salt used for the chemical strengthening treatment of the optical glass precursor substantially consists of the aforementioned components, and may contain other components according to need. As other components, there can be cited, for example, alkali sulfate, alkali chloride, alkaline earth sulfate, alkaline earth chloride, and so on such as sodium nitrate, potassium nitrate, sodium chloride, potassium chloride, calcium sulfate, strontium sulfate, barium sulfate, calcium chloride, strontium chloride and barium sulfate,.

A total content of these other components in the mixed molten salt is preferably 5% or less, and more preferably 1% or less. Other components have an effect preventing volatilization during melting in the mixed molten salt as long as the content is within the range. When the content is over 5%, the strengthening is unlikely to be enabled when the chemical strengthening treatment is performed.

A melting point of the mixed molten salt used for the chemical strengthening treatment of the optical glass precursor is preferably 300°C or less, and more preferably 250°C or less. When the melting point of the mixed molten salt is larger than 300°C, there is a possibility that adhered molten salt is solidified to generate a stress on the surface of the optical glass when the obtained optical glass is pulled up after the chemical strengthening treatment, to impair a flatness, and to enlarge an arithmetic mean undulation (Wa), and an arithmetic mean roughness (Ra) of the glass. When a strengthening temperature is high, a risk of glass deformation during strengthening becomes high.

### (Conditions of chemical strengthening treatment)

The chemical strengthening treatment is a treatment where the optical glass precursor is immersed in the mixed molten salt, and the compressive stress is induced on the surface layer of the optical glass precursor to obtain the optical glass. Treatment conditions of the chemical strengthening treatment are not particularly limited as long as they are conditions where the thickness of the strengthened layer in the obtained optical glass becomes 1 µm or more, and they can be appropriately selected from conventionally publicly-known methods.

### (1) Heating temperature of mixed molten salt and immersion time

An immersion time of the optical glass precursor into the mixed molten salt is preferably shorter because the optical glass precursor is likely to be viscoelastically deformed due to heat when the immersion time becomes long. When Li and Na are main kinds to be exchanged, the immersion time is preferably three hours or less, more preferably two hours or less, further preferably one hour or less, and still further preferably 30 minutes or less. When Na and K are exchanged, the immersion time is preferably 10 hours or less, more preferably 8 hours or less, further preferably 6 hours or less, and still further preferably 4 hours or less

An upper limit of the heating temperature of the mixed molten salt is preferably less than (Tg - 100)°C of the glass used in the optical glass precursor. When the heating temperature is higher than (Tg - 100)°C, there is a possibility that the optical glass of the present invention cannot be obtained because the optical glass precursor is not sufficiently strengthened due to stress relaxation even though the ion-exchange occurs.

### (2) Preheating temperature of optical glass precursor

The optical glass precursor is preferably preheated so that a temperature of the optical glass precursor becomes a temperature of the melting point or more of the mixed molten salt before the optical glass precursor is immersed into the mixed molten salt. This is to prevent solidification of the molten salt at the surface of the optical glass precursor at the immersion time into the mixed molten salt, and to suppress lowering of the ion-exchange rate and non-uniformity of a glass in-plane distribution at the surface layer where the compressive stress is induced.

The preheating temperature of the optical glass precursor is preferably less than 400°C, and more preferably 350°C or less. When the preheating temperature is 400°C or more, there is a possibility that a shape of the optical glass precursor changes due to an effect of a residual stress induced at the preheating time and non-uniformity of the glass in-plane temperature at a contact part or the like with a sample holder where the optical glass precursor is placed.

### (3) Cooling of optical glass

The optical glass of the present invention having the strengthened layer where the compressive stress is induced on the optical glass precursor is obtained by immersing the optical glass precursor into, for example, the mixed molten salt. The optical glass is normally pulled out of the mixed molten salt and slowly cooled.

It is preferable that the optical glass is brought into contact with a coolant to be subjected to rapid cooling after the temperature of the optical glass becomes 300°C or less by letting the optical glass pulled out of the mixed molten salt wait for 30 seconds to two minutes instead of the slow cooling. A cooling rate of the optical glass is preferably 100°C/min or more. It is preferably 4000°C/min or less, and more preferably 3000°C/min or less.

When the cooling rate of the optical glass is less than 100°C/min, there is a possibility that the flatness of the obtained optical glass is reduced and the arithmetic mean undulation (Wa) of the obtained optical glass becomes large because the ion-exchange proceeds only at a contact part of the optical glass due to the molten salt adhered on the optical glass during the cooling process, and the glass in-plane distribution of the strengthened layer where the compressive stress is induced becomes nonuniform.

When the cooling rate of the optical glass is over 4000°C/min, there is a possibility that the arithmetic mean undulation (Wa) and the arithmetic mean roughness (Ra) become large. In addition, there is a possibility that the optical glass cracks due to heat shock if the optical glass is rapidly cooled by bringing into contact with the coolant without any wait time. Further, there is a possibility that the arithmetic mean undulation (Wa) and the arithmetic mean roughness (Ra) become large.

In the aforementioned chemical strengthening treatment method, the optical glass is preferably not repolished after the chemical strengthening treatment process. It is because the shape of the optical glass is sufficiently stable without repolishing the optical glass after the chemical strengthening treatment process according to the chemical strengthening treatment method.

The optical glass fabricated as above is available for various optical elements, and in particular, it is suitably used for purposes exposed to harsh environment such as an imaging lens used for a vehicle-mounted camera.

The optical glass of the present invention described hereinabove is an optical glass with high refractive index and high strength which is suitable for an imaging lens or the like used for a vehicle-mounted camera exposed to harsh environment. According to the present invention, an optical glass with excellent crack resistance and good moldability can further be obtained.

### EXAMPLES

Raw materials were weighted to have chemical compositions (mass% in terms of oxides) listed in Tables 1 to 6. High purity materials used for a normal optical glass such as oxide, hydroxide, carbonate, nitrate, fluoride, hydroxide, and a metaphosphoric acid compound each corresponding to raw materials of each component were selected and used as the raw materials.

The weighted raw materials were uniformly mixed, put into a platinum crucible with an internal volume of about 300 mL, melted at approximately 1400°C for about two hours, clarified, stirred, and thereafter, retained at 1400°C for 0.5 hours, then casted into a rectangular mold of 50 mm in length × 100 mm in width which was preheated to approximately 650°C, and it was slowly cooled at about 0.5°C/min to obtain a glass of 50 mm in length × 100 mm in width × 15 mm in thickness.

The obtained glass was processed into a plate material with a size of about 20 mm × 20 mm × 2 mm (thickness), a surface of 20 mm × 20 mm was subjected to mirror-polishing by using CeO₂ to obtain an optical glass precursor. Next, the following chemical strengthening treatment was performed. That is, nitrate with a mass ratio between Na and K of 1: 0 (hereinafter, it is denoted by a "condition 1"), nitrate with Na : K of 1: 1 (hereinafter, it is denoted by a "condition 2"), nitrate with Na : K of 3: 1 (hereinafter, it is denoted by a "condition 3") were each heated to 400°C and melted, and the optical glass precursor was immersed into each molten for 30 minutes to be subjected to the chemical strengthening treatment, and the optical glass was obtained. The optical glass precursor was subjected to the chemical strengthening treatment in a molten salt of KNO₃ molten salt (hereinafter, it is denoted by a "condition 4") at 425°C for three hours to obtain the optical glass. A size of the obtained optical glass was 20 mm × 20 mm × 2 mm (thickness).

### [Evaluation]

There were measured a glass transition point (Tg), a refractive index (nd), a specific gravity, Young's modulus (E), a devitrification temperature, water resistance (RW), acid resistance (RA), and transmittance at the wavelength of 360 nm (T₃₆₀) by the following methods regarding the glass used in the optical glass precursor. In addition, there were measured a crack initiation load (CIL), a DOL, and scratch resistance as described below regarding the optical glass obtained by performing the chemical strengthening treatment on the optical glass precursor.

Tg: A sample processed into a column shape with a diameter of 5 mm and a length of 20 mm was measured through a thermal expansion method by using a thermomechanical analyzer (manufactured by Bruker AXS Corporation, product name: TMA4000SA) at a heating rate of 5°C/min.
nd: A sample glass was processed into a triangle-shaped prism with a size of 30 mm on each side, and a thickness of 10 mm, to be measured by a refractometer (manufactured by Kalnew Corporation, device name: KPR-2000).
Specific gravity: A ratio between a mass of a sample and a mass of pure water at 4°C with the same volume as the sample under a pressure of 101.325 kPa (standard pressure) was displayed as SG, and measured based on JIS Z8807 (1976, a measuring method by weighting in liquid).

E: A block-shaped sample with a size of 20 mm × 20 mm × 10 mm was measured by using an ultrasonic precision thickness gauge (manufactured by OLYMPUS Corporation, MODEL 38DL PLUS) (unit: GPa).

Devitrification temperature: About 5 g of a sample was put into a platinum dish, retained at temperatures every 10°C from 1000°C to 1400°C each for one hour and the resultant was naturally cooled, then presence or absence of crystal precipitation was observed by a microscope, and a maximum temperature where a crystal with a size of 1 µm or more in a long edge or a major axis was not recognized was set as the devitrification temperature.

RW: Measurement was performed based on JOGIS06-2008, the measuring method for chemical durability of optical glass (powder method). Concretely, a mass decrease rate (%) was measured when glass powder with a diameter of 420 to 600 µm formed from the optical glass precursor by using an alumina mortar and pestle was immersed in 80 mL of pure water at 100°C for one hour. In case when the mass decrease rate was less than 0.05 (%), a class was set to 1, in case of 0.05 or more and less than 0.10 (%), the class was set to 2, in case of 0.10 or more and less than 0.25 (%), the class was set to 3, in case of 0.25 or more and less than 0.60 (%), the class was set to 4, in case of 0.60 or more and less than 1.10 (%), the class was set to 5, and in case of 1.10 (%) or more, the class was set to 6.

RA: Measurement was performed based on JOGIS06-2008, the measuring method for chemical durability of optical glass (powder method). Concretely, a mass decrease rate (%) was measured when glass powder with a diameter of 420 to 600 µm formed from the optical glass precursor by using an alumina mortar and pestle was immersed in 80 mL of 0.01 normal aqueous solution of nitric acid at 100°C for one hour. In case when the mass decrease rate was less than 0.20 (%), a class was set to 1, in case of 0.20 or more and less than 0.35 (%), the class was set to 2, in case of 0.35 or more and less than 0.65 (%), the class was set to 3, in case of 0.65 or more and less than 1.20 (%), the class was set to 4, in case of 1.20 or more and less than 2.20 (%), the class was set to 5, and in case of 2.20 (%) or more, the class was set to 6.

### CIL: Measured by the aforementioned method.

DOL: The DOL (µm) being a thickness of a strengthened layer at the optical glass was measured by using a surface stress meter FSM-6000 (manufactured by Orihara Manufacturing Co., Ltd.) regarding the optical glass obtained by being subjected to the chemical strengthening under the condition 4. The DOL (µm) was measured by using WPA-micro manufactured by Photonic Lattice, Inc. of a stress profile by using retardation of a sheet thickness in a sectional direction regarding a measurement sample cut out in a length of 500 µm in a width direction regarding each of the optical glasses obtained by being subjected to the chemical strengthening under the conditions 1 to 3.

### Scratch resistance: Measured by the aforementioned method.

**T₃₆₀:** Transmittance of light at a wavelength of 360 nm was measured by a spectrophotometer (manufactured by Hitachi High-Technologies Corporation U-4100) regarding a glass plate (not having the strengthened layer) with a size of 10 mm × 30 mm × 1 mm in thickness.

Results and the compositions of the glasses are listed in Tables 1 to 6. In Tables 1 to 6, "Ex" means Example, Examples 1 to 48, 53 to 55 are examples, and Examples 49 to 52 are comparative examples. Each numeric value in () in the tables represents a calculated value, and a blank column represents that the value is not measured.

**[Table 1]**

| | Ex1 | Ex2 | Ex3 | Ex4 | Ex5 | Ex6 | Ex7 | Ex8 | Ex9 |
|---|---|---|---|---|---|---|---|---|---|
| Nb₂O₅ | 41.9 | 47.7 | 47.0 | 48.3 | 49.0 | 48.3 | 48.6 | 48.8 | 44.4 |
| SiO₂ | 22.6 | 28.7 | 28.3 | 29.1 | 29.5 | 29.1 | 29.2 | 29.4 | 30.8 |
| TiO₂ | 6.5 | 6.1 | 6.0 | 6.2 | 6.3 | 6.2 | 6.2 | 6.3 | 8.6 |
| ZrO₂ | 6.5 | 2.1 | 2.1 | 2.2 | 2.2 | 2.2 | 2.2 | 2.2 | 2.3 |
| Li₂O | 4.3 | 4.8 | 3.4 | 6.1 | 6.2 | 4.8 | 4.9 | 4.9 | 5.1 |
| Na₂O | 4.3 | 2.7 | 5.2 | 0.0 | 2.7 | 5.4 | 6.3 | 7.3 | 7.7 |
| K₂O | 3.2 | 8.0 | 7.9 | 8.1 | 4.1 | 4.0 | 2.7 | 1.1 | 1.2 |
| BaO | 4.3 | 0.0 | 0.0 | 0.0 | 0.0 | 0.0 | 0.0 | 0.0 | 0.0 |
| ZnO | 0.0 | 0.0 | 0.0 | 0.0 | 0.0 | 0.0 | 0.0 | 0.0 | 0.0 |
| La₂O₃ | 3.2 | 0.0 | 0.0 | 0.0 | 0.0 | 0.0 | 0.0 | 0.0 | 0.0 |
| P₂O₅ | 0.0 | 0.0 | 0.0 | 0.0 | 0.0 | 0.0 | 0.0 | 0.0 | 0.0 |
| B₂O₃ | 2.2 | 0.0 | 0.0 | 0.0 | 0.0 | 0.0 | 0.0 | 0.0 | 0.0 |
| MgO | 0.0 | 0.0 | 0.0 | 0.0 | 0.0 | 0.0 | 0.0 | 0.0 | 0.0 |
| CaO | 0.0 | 0.0 | 0.0 | 0.0 | 0.0 | 0.0 | 0.0 | 0.0 | 0.0 |
| SrO | 0.0 | 0.0 | 0.0 | 0.0 | 0.0 | 0.0 | 0.0 | 0.0 | 0.0 |
| Al₂O₃ | 0.0 | 0.0 | 0.0 | 0.0 | 0.0 | 0.0 | 0.0 | 0.0 | 0.0 |
| Y₂O₃ | 0.0 | 0.0 | 0.0 | 0.0 | 0.0 | 0.0 | 0.0 | 0.0 | 0.0 |
| WO₃ | 1.1 | 0.0 | 0.0 | 0.0 | 0.0 | 0.0 | 0.0 | 0.0 | 0.0 |
| Bi₂O₃ | 0.0 | 0.0 | 0.0 | 0.0 | 0.0 | 0.0 | 0.0 | 0.0 | 0.0 |
| Gd₂O₃ | 0.0 | 0.0 | 0.0 | 0.0 | 0.0 | 0.0 | 0.0 | 0.0 | 0.0 |
| F | 0.0 | 0.0 | 0.0 | 0.0 | 0.0 | 0.0 | 0.0 | 0.0 | 0.0 |
| Ln₂O₃ | 3.2 | 0.0 | 0.0 | 0.0 | 0.0 | 0.0 | 0.0 | 0.0 | 0.0 |
| Li₂O/(Li₂O+Na₂O+K₂O) | 0.36 | 0.31 | 0.21 | 0.43 | 0.48 | 0.34 | 0.35 | 0.37 | 0.37 |
| Na₂O/(Li₂O+Na₂O+K₂O) | 0.36 | 0.17 | 0.32 | 0.00 | 0.21 | 0.38 | 0.46 | 0.55 | 0.55 |
| Li₂O+Na₂O+K₂O | 11.8 | 15.4 | 16.5 | 14.2 | 13.0 | 14.2 | 13.8 | 13.3 | 14.0 |
| Li₂O+Na₂O | 8.6 | 7.4 | 8.7 | 6.1 | 8.9 | 10.2 | 11.1 | 12.2 | 12.8 |
| Nb₂O₅-(La₂O₃+BaO) | 34.3 | 47.7 | 47.0 | 48.3 | 49.0 | 48.3 | 48.6 | 48.8 | 44.4 |
| (Nb₂O₆-(La₂O₃+BaO))× Li₂O/(Li₂O+Na₂O+K₂O) | 12.5 | 14.8 | 9.8 | 20.9 | 23.5 | 16.5 | 17.1 | 17.9 | 16.2 |
| (Li₂O+Na₂O+K₂O)/Ln₂O₃ | | | | | | | | | |
| n_{d} | 1.85 | 1.82 | 1.81 | 1.82 | 1.83 | 1.83 | 1.83 | 1.84 | 1.82 |
| Tg (°C) | 549 | 557 | 560 | 562 | 556 | 556 | 555 | 553 | |
| Devitrification temperature (°C) | | | | | | | | | |
| E (GPa) | | | 98 | 99 | 104 | 102 | 103 | 104 | 104 |
| Specific gravity (g/cm³) | 3.60 | 3.34 | 3.35 | 3.34 | 3.37 | 3.37 | 3.38 | 3.39 | 3.33 |
| CIL (gf) (not strengthened) | | | | | | | | | |
| CIL (gf) (condition 1) | | 101 | 101 | 200 | 210 | 210 | 250 | 320 | 400 |
| CIL (gf) (condition 2) | | | | 101 | 400 | 180 | | | |
| CIL (gf) (condition 3) | | | 100 | 200 | 500 | 200 | | | |
| CIL (gf) (condition 4) | 102 | 115 | | | | | | | |
| DOL(µm) | 30 to 200 | 30 to 200 | 30 to 200 | 30 to 200 | 30 to 200 | 30 to 200 | 30 to 200 | 30 to 200 | 30 to 200 |
| T₃₆₀ (%) | | | | | | | | | |
| RA (class) | | | | | | | | | |
| RW (class) | | | | | | | | | |
| Scratch resistance (gf) | >200 | >200 | >200 | >200 | >200 | >200 | >200 | >200 | >200 |

**[Table 2]**

| | Ex10 | Ex11 | Ex12 | Ex13 | Ex14 | Ex15 | Ex16 | Ex17 | Ex18 |
|---|---|---|---|---|---|---|---|---|---|
| Nb₂O₅ | 38.6 | 34.1 | 53.7 | 52.8 | 51.7 | 53.1 | 51.7 | 51.1 | 51.3 |
| SiO₂ | 32.5 | 34.0 | 30.4 | 29.8 | 29.2 | 30.0 | 29.2 | 28.9 | 29.0 |
| TiO₂ | 11.6 | 14.0 | 5.4 | 5.3 | 5.2 | 5.3 | 5.2 | 5.1 | 5.1 |
| ZrO₂ | 2.4 | 2.5 | 0.0 | 0.0 | 0.0 | 0.0 | 0.0 | 0.0 | 0.0 |
| Li₂O | 5.4 | 5.6 | 6.7 | 4.9 | 2.9 | 6.6 | 3.9 | 2.9 | 4.8 |
| Na₂O | 8.1 | 8.5 | 2.8 | 6.2 | 10.0 | 0.7 | 6.0 | 7.9 | 0.7 |
| K₂O | 1.3 | 1.3 | 1.1 | 1.0 | 1.0 | 4.2 | 4.1 | 4.0 | 9.1 |
| BaO | 0.0 | 0.0 | 0.0 | 0.0 | 0.0 | 0.0 | 0.0 | 0.0 | 0.0 |
| ZnO | 0.0 | 0.0 | 0.0 | 0.0 | 0.0 | 0.0 | 0.0 | 0.0 | 0.0 |
| La₂O₃ | 0.0 | 0.0 | 0.0 | 0.0 | 0.0 | 0.0 | 0.0 | 0.0 | 0.0 |
| P₂O₅ | 0.0 | 0.0 | 0.0 | 0.0 | 0.0 | 0.0 | 0.0 | 0.0 | 0.0 |
| B₂O₃ | 0.0 | 0.0 | 0.0 | 0.0 | 0.0 | 0.0 | 0.0 | 0.0 | 0.0 |
| MgO | 0.0 | 0.0 | 0.0 | 0.0 | 0.0 | 0.0 | 0.0 | 0.0 | 0.0 |
| CaO | 0.0 | 0.0 | 0.0 | 0.0 | 0.0 | 0.0 | 0.0 | 0.0 | 0.0 |
| SrO | 0.0 | 0.0 | 0.0 | 0.0 | 0.0 | 0.0 | 0.0 | 0.0 | 0.0 |
| Al₂O₃ | 0.0 | 0.0 | 0.0 | 0.0 | 0.0 | 0.0 | 0.0 | 0.0 | 0.0 |
| Y₂O₃ | 0.0 | 0.0 | 0.0 | 0.0 | 0.0 | 0.0 | 0.0 | 0.0 | 0.0 |
| WO₃ | 0.0 | 0.0 | 0.0 | 0.0 | 0.0 | 0.0 | 0.0 | 0.0 | 0.0 |
| Bi₂O₃ | 0.0 | 0.0 | 0.0 | 0.0 | 0.0 | 0.0 | 0.0 | 0.0 | 0.0 |
| Gd₂O₃ | 0.0 | 0.0 | 0.0 | 0.0 | 0.0 | 0.0 | 0.0 | 0.0 | 0.0 |
| F | 0.0 | 0.0 | 0.0 | 0.0 | 0.0 | 0.0 | 0.0 | 0.0 | 0.0 |
| Ln₂O₃ | 0.0 | 0.0 | 0.0 | 0.0 | 0.0 | 0.0 | 0.0 | 0.0 | 0.0 |
| Li₂O/(Li₂O+Na₂O+K₂O) | 0.37 | 0.37 | 0.64 | 0.41 | 0.21 | 0.58 | 0.28 | 0.19 | 0.33 |
| Na₂O/(Li₂O+Na₂O+K₂O) | 0.55 | 0.55 | 0.26 | 0.51 | 0.72 | 0.06 | 0.43 | 0.54 | 0.05 |
| Li₂O+Na₂O+K₂O | 14.8 | 15.4 | 10.6 | 12.1 | 14.0 | 11.5 | 14.0 | 14.8 | 14.6 |
| Li₂O+Na₂O | 13.5 | 14.1 | 9.5 | 11.1 | 12.9 | 7.3 | 9.9 | 10.8 | 5.5 |
| Nb₂O₅-(La₂O₃+BaO) | 38.6 | 34.1 | 53.7 | 52.8 | 51.7 | 53.1 | 51.7 | 51.1 | 51.3 |
| (Nb₂O₅-(La₂O₃+BaO))× Li₂O/(Li₂O+Na₂O+K₂O) | 14.1 | 12.5 | 34.2 | 21.5 | 10.7 | 30.6 | 14.3 | 9.9 | 16.9 |
| (Li₂O+Na₂O+K₂O)/Ln₂O₃ | | | | | | | | | |
| n_{d} | 1.81 | 1.80 | (1.84) | 1.84 | 1.83 | 1.84 | 1.83 | 1.82 | 1.82 |
| Tg (°C) | | | (555) | 558 | 575 | 559 | 562 | 569 | 567 |
| Devitrification temperature (°C) | | | | | | | | | |
| E (GPa) | 104 | 103 | | 104 | 101 | 103 | 101 | 99 | 97 |
| Specific gravity (g/cm³) | 3.26 | 3.21 | | 3.40 | 3.40 | 3.37 | 3.38 | 3.38 | 3:34 |
| CIL (gf) (not strengthened) | | | | | | | | | |
| CIL (gf) (condition 1) | 400 | 400 | 346 | 110 | | 196 | | | |
| CIL (gf) (condition 2) | | | 408 | 111 | | | | | |
| CIL (gf) (condition 3) | | | 346 | | | 290 | | | |
| CIL (gf) (condition 4) | | | | | 112 | | 111 | 154 | 141 |
| DOL(µm) | 30 to 200 | 30 to 200 | 30 to 200 | 30 to 200 | 30 to 200 | 30 to 200 | 30 to 200 | 30 to 200 | 30 to 200 |
| T₃₆₀ (%) | | | | | | | | | |
| RA (class) | | | | | | | | | |
| RW (class) | | | | | | | | | |
| Scratch resistance (gf) | >200 | >200 | >200 | >200 | >200 | >200 | >200 | >200 | >200 |

**[Table 3]**

| | Ex19 | Ex20 | Ex21 | Ex22 | Ex23 | Ex24 | Ex25 | Ex26 | Ex27 |
|---|---|---|---|---|---|---|---|---|---|
| Nb₂O₅ | 50.8 | 49.9 | 53.5 | 54.3 | 53.8 | 57.6 | 41.4 | 59.2 | 53.2 |
| SiO₂ | 28.7 | 28.2 | 30.2 | 26.6 | 31.7 | 24.1 | 39.8 | 22.9 | 30.0 |
| TiO₂ | 5.1 | 5.0 | 5.4 | 8.2 | 3.6 | 7.8 | 6.2 | 7.6 | 5.3 |
| ZrO₂ | 0.0 | 0.0 | 0.0 | 0.0 | 0.0 | 0.0 | 0.0 | 0.0 | 0.0 |
| Li₂0 | 3.8 | 2.2 | 6.4 | 6.4 | 6.4 | 6.2 | 7.4 | 6.0 | 5.7 |
| Na₂O | 2.6 | 5.8 | 3.5 | 3.5 | 3.5 | 3.4 | 4.0 | 3.3 | 4.7 |
| K₂O | 9.0 | 8.8 | 1.1 | 1.1 | 1.1 | 1.0 | 1.2 | 1.0 | 1.0 |
| BaO | 0.0 | 0.0 | 0.0 | 0.0 | 0.0 | 0.0 | 0.0 | 0.0 | 0.0 |
| ZnO | 0.0 | 0.0 | 0.0 | 0.0 | 0.0 | 0.0 | 0.0 | 0.0 | 0.0 |
| La₂O₃ | 0.0 | 0.0 | 0.0 | 0.0 | 0.0 | 0.0 | 0.0 | 0.0 | 0.0 |
| P₂O₅ | 0.0 | 0.0 | 0.0 | 0.0 | 0.0 | 0.0 | 0.0 | 0.0 | 0.0 |
| B₂O₃ | 0.0 | 0.0 | 0.0 | 0.0 | 0.0 | 0.0 | 0.0 | 0.0 | 0.0 |
| MgO | 0.0 | 0.0 | 0.0 | 0.0 | 0.0 | 0.0 | 0.0 | 0.0 | 0.0 |
| CaO | 0.0 | 0.0 | 0.0 | 0.0 | 0.0 | 0.0 | 0.0 | 0.0 | 0.0 |
| SrO | 0.0 | 0.0 | 0.0 | 0.0 | 0.0 | 0.0 | 0.0 | 0.0 | 0.0 |
| Al₂O₃ | 0.0 | 0.0 | 0.0 | 0.0 | 0.0 | 0.0 | 0.0 | 0.0 | 0.0 |
| Y₂O₃ | 0.0 | 0.0 | 0.0 | 0.0 | 0.0 | 0.0 | 0.0 | 0.0 | 0.0 |
| WO₃ | 0.0 | 0.0 | 0.0 | 0.0 | 0.0 | 0.0 | 0.0 | 0.0 | 0.0 |
| Bi₂O₃ | 0.0 | 0.0 | 0.0 | 0.0 | 0.0 | 0.0 | 0.0 | 0.0 | 0.0 |
| Gd₂O₃ | 0.0 | 0.0 | 0.0 | 0.0 | 0.0 | 0.0 | 0.0 | 0.0 | 0.0 |
| F | 0.0 | 0.0 | 0.0 | 0.0 | 0.0 | 0.0 | 0.0 | 0.0 | 0.0 |
| Ln₂O₃ | 0.0 | 0.0 | 0.0 | 0.0 | 0.0 | 0.0 | 0.0 | 0.0 | 0.0 |
| Li₂O/(Li₂O+Na₂O+K₂O) | 0.25 | 0.13 | 0.58 | 0.58 | 0.58 | 0.58 | 0.58 | 0.58 | 0.50 |
| Na₂O/(Li₂O+Na₂O+K₂O) | 0.17 | 0.35 | 0.32 | 0.32 | 0.32 | 0.32. | 0.32 | 0.32 | 0.41 |
| Li₂O+Na₂O+K₂O | 15.4 | 16.9 | 10.9 | 11.0 | 10.9 | 10.5 | 12.6 | 10.3 | 11.5 |
| Li₂O+Na₂O | 6.4 | 8.0 | 9.8 | 10.0 | 9.9 | 9.5 | 11.4 | 9.3 | 10.4 |
| Nb₂O₅-(La₂O₃+BaO) | 50.8 | 49.9 | 53.5 | 54.3 | 53.8 | 57.6 | 41.4 | 59.2 | 53.2 |
| (Nb₂O₅-(La₂O₃+BaO))× Li₂O/(Li₂O+Na₂O+K₂O) | 12.5 | 6.5 | 31.3 | 31.7 | 31.4 | 33.6 | 24.2 | 34.6 | 26.4 |
| (Li₂O+Na₂O+K₂O)/Ln₂O₃ | | | | | | | | | |
| n_{d} | 1.82 | 1.81 | 1.85 | 1.88 | 1.83 | 1.91 | 1.76 | 1.92 | 1.84 |
| Tg (°C) | 565 | 574 | 556 | 551 | 558 | 552 | 552 | 552 | 556 |
| Devitrification temperature (°C) | | | 1080 | | | | (1040) | | |
| E (GPa) | 96 | 94 | 106 | 108 | 104 | 109 | 102 | 109 | 105 |
| Specific gravity (g/cm³) | 3.34 | 3.35 | 3.39 | 3.47 | 3.37 | 3.54 | 3.15 | 3.58 | 3.39 |
| CIL (gf) (not strengthened) | | | | | | | | | |
| CIL (gf) (condition 1) | | | 355 | 348 | 171 | 255 | | 192 | 110 |
| CIL (gf) (condition 2) | | | 652 | | | | | | 210 |
| CIL (gf) (condition 3) | | | 644 | 164 | 276 | 268 | 124 | 237 | 189 |
| CIL (gf) (condition 4) | 122 | 207 | | | | | | | |
| DOL(µm) | 30 to 200 | 30 to 200 | 50 | 30 to 200 | 30 to 200 | 30 to 200 | 30 to 200 | 30 to 200 | 30 to 200 |
| T₃₆₀ (%) | | | 40 | | | | | | 60 |
| RA (class) | | | 1 | | | | | | |
| RW (class) | | | 1 | | | | | | |
| Scratch resistance (gf) | >200 | >200 | >1000 | >200 | >200 | >200 | >200 | >200 | >200 |

**[Table 4]**

| | Ex28 | Ex29 | Ex30 | Ex31 | Ex32 | Ex33 | Ex34 | Ex35 | Ex36 |
|---|---|---|---|---|---|---|---|---|---|
| Nb₂O₅ | 53.2 | 51.9 | 52.2 | 51.6 | 48.8 | 54.7 | 51.9 | 48.4 | 50.6 |
| SiO₂ | 30.0 | 30.2 | 29.2 | 31.3 | 31.8 | 28.8 | 29.0 | 31.6 | 27.7 |
| TiO₂ | 5.3 | 0.0 | 0.0 | 0.0 | 0.0 | 0.0 | 0.0 | 0.0 | 0.0 |
| ZrO₂ | 0.0 | 7.6 | 7.6 | 7.5 | 8.0 | 7.2 | 7.6 | 7.9 | 7.4 |
| Li₂0 | 6.3 | 6.1 | 6.8 | 5.5 | 7.1 | 5.3 | 6.1 | 6.4 | 6.0 |
| Na₂O | 2.1 | 3.2 | 3.2 | 3.2 | 3.3 | 3.0 | 4.5 | 4.7 | 3.1 |
| K₂O | 3.0 | 1.0 | 1.0 | 1.0 | 1.0 | 0.9 | 1.0 | 1.0 | 0.9 |
| BaO | 0.0 | 0.0 | 0.0 | 0.0 | 0.0 | 0.0 | 0.0 | 0.0 | 0.0 |
| ZnO | 0.0 | 0.0 | 0.0 | 0.0 | 0.0 | 0.0 | 0.0 | 0.0 | 0.0 |
| La₂O₃ | 0.0 | 0.0 | 0.0 | 0.0 | 0.0 | 0.0 | 0.0 | 0.0 | 0.0 |
| P₂O₅ | 0.0 | 0.0 | 0.0 | 0.0 | 0.0 | 0.0 | 0.0 | 0.0 | 4.3 |
| B₂O₃ | 0.0 | 0.0 | 0.0 | 0.0 | 0.0 | 0.0 | 0.0 | 0.0 | 0.0 |
| MgO | 0.0 | 0.0 | 0.0 | 0.0 | 0.0 | 0.0 | 0.0 | 0.0 | 0.0 |
| CaO | 0.0 | 0.0 | 0.0 | 0.0 | 0.0 | 0.0 | 0.0 | 0.0 | 0.0 |
| SrO | 0.0 | 0.0 | 0.0 | 0.0 | 0.0 | 0.0 | 0.0 | 0.0 | 0.0 |
| Al₂O₃ | 0.0 | 0.0 | 0.0 | 0.0 | 0.0 | 0.0 | 0.0 | 0.0 | 0.0 |
| Y₂O₃ | 0.0 | 0.0 | 0.0 | 0.0 | 0.0 | 0.0 | 0.0 | 0.0 | 0.0 |
| WO₃ | 0.0 | 0.0 | 0.0 | 0.0 | 0.0 | 0.0 | 0.0 | 0.0 | 0.0 |
| Bi₂O₃ | 0.0 | 0.0 | 0.0 | 0.0 | 0.0 | 0.0 | 0.0 | 0.0 | 0.0 |
| Gd₂O₃ | 0.0 | 0.0 | 0.0 | 0.0 | 0.0 | 0.0 | 0.0 | 0.0 | 0.0 |
| F | 0.0 | 0.0 | 0.0 | 0.0 | 0.0 | 0.0 | 0.0 | 0.0 | 0.0 |
| Ln₂O₃ | 0.0 | 0.0 | 0.0 | 0.0 | 0.0 | 0.0 | 0.0 | 0.0 | 0.0 |
| Li₂O/(Li₂O+Na₂O+K₂O) | 0.55 | 0.60 | 0:62 | 0.57 | 0.62 | 0.57 | 0.53 | 0.53 | 0.60 |
| Na₂O/(Li₂O+Na₂O+K₂O) | 0.19 | 0.31 | 0.29 | 0.33 | 0.29 | 0.33 | 0.39 | 0.39 | 0.31 |
| Li₂O+Na₂O+K₂O | 11.5 | 10.3 | 11.0 | 9.6 | 11.5 | 9.2 | 11.6 | 12.1 | 10.0 |
| Li₂O+Na₂O | 8.5 | 9.3 | 10.0 | 8.7 | 10.4 | 8.3 | 10.6 | 11.1 | 9.1 |
| Nb₂O₅-(La₂O₃+BaO) | 53.2 | 51.9 | 52.2 | 51.6 | 48.8 | 54.7 | 51.9 | 48.4 | 50.6 |
| (Nb₂O₅-(La₂O₃+BaO))× Li₂O/(Li₂O+Na₂O+K₂O) | 29.2 | 30.9 | 32.3 | 29.4 | 30.2 | 31.2 | 27.5 | 25.7 | 30.2 |
| (Li₂O+Na₂O+K₂O)/Ln₂O₃ | | | | | | | | | |
| n_{d} | 1.84 | 1.83 | 1.83 | 1.82 | 1.81 | 1.85 | 1.83 | 1.81 | 1.84 |
| Tg (°C) | 556 | 581 | 576 | 583 | 575 | 579 | 575 | 576 | 577 |
| Devitrification temperature (°C) | | 1240 | 1240 | 1190 | (1190) | 1250 | (1200) | (1190) | (1150) |
| E (GPa) | 104 | 107 | 107 | 105 | 106 | 106 | 107 | 106 | 109 |
| Specific gravity (g/cm³) | 3.38 | 3.45 | 3.46 | 3.43 | 3.39 | 3.50 | 3.46 | 3.39 | 3.47 |
| CIL (gf) (not strengthened) | | | | | | | | | |
| CIL (gf) (condition 1) | 187 | 534 | 535 | 239 | 606 | 200 | 500 | 249 | 652 |
| CIL (gf) (condition 2) | 107 | 975 | 139 | 462 | 686 | 281 | 518 | 557 | 556 |
| CIL (gf) (condition 3) | 345 | 579 | 626 | 324 | 571 | 345 | 374 | | 524 |
| CIL (gf) (condition 4) | | | | | | | | | |
| DOL(µm) | 30 to 200 | 50 | 30 to 200 | 30 to 200 | 30 to 200 | 30 to 200 | 30 to 200 | 30 to 200 | 30 to 200 |
| T₃₆₀ (%) | | 80 | | | | | | | |
| RA (class) | | 1 | | | | | | | |
| RW (class) | | 1 | | | | | | | |
| Scratch resistance (gf) | >200 | >1000 | >200 | >200 | >1000 | >1000 | >1000 | >1000 | >1000 |

**[Table 5]**

| | Ex37 | Ex38 | Ex39 | Ex40 | Ex41 | Ex42 | Ex43 | Ex44 | Ex45 |
|---|---|---|---|---|---|---|---|---|---|
| Nb₂O₅ | 51.7 | 52.2 | 51.2 | 51.6 | 47.9 | 51.5 | 51.9 | 8.4 | 7.6 |
| SiO₂ | 28.3 | 28.6 | 28.0 | 28.2 | 26.2 | 28.2 | 30.2 | 15.2 | 12.6 |
| TiO₂ | 0.0 | 0.0 | 0.0 | 2.4 | 0.0 | 0.0 | 0.0 | 7.4 | 5.9 |
| ZrO₂ | 7.6 | 7.6 | 7.5 | 7.5 | 7.0 | 7.5 | 7.6 | 5.1 | 4.2 |
| Li₂O | 6.1 | 6.2 | 6.1 | 6.1 | 5.7 | 6.1 | 6.1 | 9.8 | 6.8 |
| Na₂O | 3.2 | 3.2 | 3.1 | 3.2 | 2.9 | 3.2 | 3.2 | 0.0 | 2.1 |
| K₂O | 1.0 | 1.0 | 1.0 | 1.0 | 0.9 | 1.0 | 1.0 | 0.0 | 1.1 |
| BaO | 0.0 | 0.0 | 0.0 | 0.0 | 0.0 | 0.0 | 0.0 | 0.0 | 0.0 |
| ZnO | 0.0 | 0.0 | 0.0 | 0.0 | 0.0 | 2.5 | 0.0 | 0.0 | 0.0 |
| La₂O₃ | 0.0 | 0.0 | 0.0 | 0.0 | 9.3 | 0.0 | 0.0 | 18.0 | 33.3 |
| P₂O₅ | 0.0 | 0.0 | 0.0 | 0.0 | 0.0 | 0.0 | 0.0 | 0.0 | 0.0 |
| B₂O₃ | 2.1 | 0.0 | 0.0 | 0.0 | 0.0 | 0.0 | 0.0 | 21.2 | 17.4 |
| MgO | 0.0 | 1.2 | 0.0 | 0.0 | 0.0 | 0.0 | 0.0 | 0.9 | 0.7 |
| CaO | 0.0 | 0.0 | 0.0 | 0.0 | 0.0 | 0.0 | 0.0 | 14.1 | 8.3 |
| SrO | 0.0 | 0.0 | 0.0 | 0.0 | 0.0 | 0.0 | 0.0 | 0.0 | 0.0 |
| Al₂O₃ | 0.0 | 0.0 | 3.1 | 0.0 | 0.0 | 0.0 | 0.0 | 0.0 | 0.0 |
| Y₂O₃ | 0.0 | 0.0 | 0.0 | 0.0 | 0.0 | 0.0 | 0.0 | 0.0 | 0.0 |
| WO₃ | 0.0 | 0.0 | 0.0 | 0.0 | 0.0 | 0.0 | 0.0 | 0.0 | 0.0 |
| Bi₂O₃ | 0.0 | 0.0 | 0.0 | 0.0 | 0.0 | 0.0 | 0.0 | 0.0 | 0.0 |
| Gd₂O₃ | 0.0 | 0.0 | 0.0 | 0.0 | 0.0 | 0.0 | 0.0 | 0.0 | 0.0 |
| F | 0.0 | 0.0 | 0.0 | 0.0 | 0.0 | 0.0 | 0.0 | 0.0 | 0.0 |
| Ln₂O₃ | 0.0 | 0.0 | 0.0 | 0.0 | 9.3 | 0.0 | 0.0 | 18.0 | 33.3 |
| Li₂O/(Li₂O+Na₂O+K₂O) | 0.60 | 0.60 | 0.60 | 0.60 | 0.60 | 0.60 | 0.60 | 1.00 | 0.68 |
| Na₂O/(Li₂O+Na₂O+K₂O) | 0.31 | 0.31 | 0.31 | 0.31 | 0.31 | 0.31 | 0.31 | 0.00 | 0.21 |
| Li₂O+Na₂O+K₂O | 10.3 | 10.4 | 10.2 | 10.2 | 9.5 | 10.2 | 10.3 | 9.8 | 10.0 |
| Li₂O+Na₂O | 9.3 | 9.4 | 9.2 | 9.3 | 8.6 | 9.3 | 9.3 | 9.8 | 8.9 |
| Nb₂O₅-(La₂O₃+BaO) | 51.7 | 52.2 | 51.2 | 51.6 | 38.7 | 51.5 | 51.9 | | |
| (Nb₂O₅-(La₂O₃+BaO))× Li₂O/(Li₂O+Na₂O+K₂O) | 30.9 | 31.1 | 30.6 | 30.8 | 23.1 | 30.7 | 30.9 | | |
| (Li₂O+Na₂O+K₂O)/Ln₂O₃ | | | | | | | | 0.5 | 0.3 |
| n_{d} | 1.84 | 1.84 | 1.82 | 1.86 | 1.86 | 1.84 | 1.83 | 1.75 | 1.75 |
| Tg (°C) | 552 | 570 | 568 | 573 | 587 | 562 | 553 | 483 | 457 |
| Devitrification temperature (°C) | (1200) | (1230) | (1260) | (1250) | (1260) | (1260) | (1240) | | |
| E (GPa) | 111 | 112 | 107 | 112 | 114 | 112 | 110 | 117 | 110 |
| Specific gravity (g/cm³) | 3.47 | 3.49 | 3.43 | 3.52 | 3.70 | 3.53 | 3.45 | 3.30 | 3.53 |
| CIL (gf) (not strengthened) | | | | | | | | | |
| CIL (gf) (condition 1) | 626 | 724 | 239 | 606 | 200 | 500 | 611 | | |
| CIL (gf) (condition 2) | 322 | 408 | 500 | 434 | | 130 | 245 | | |
| CIL (gf) (condition 3) | 248 | 282 | 489 | 388 | 149 | 185 | 272 | | |
| CIL (gf) (condition 4) | | | | | | | | | |
| DOL(µm) | 30 to 200 | 30 to 200 | 30 to 200 | 30 to 200 | 30 to 200 | 30 to 200 | 30 to 200 | >30 | >30 |
| T₃₆₀ (%) | | | | | | | | | |
| RA (class) | | | | | | | | | |
| RW (class) | | | | | | | | | |
| Scratch resistance (gf) | >1000 | >1000 | >1000 | >1000 | >1000 | >1000 | >1000 | >1000 | >200 |

**[Table 6]**

| | Ex46 | Ex47 | Ex48 | Ex49 | Ex50 | Ex51 | Ex52 | Ex53 | Ex54 | Ex55 |
|---|---|---|---|---|---|---|---|---|---|---|
| Nb₂O₅ | 41.3 | 46.4 | 47.0 | 24.6 | 0.0 | 0.0 | 0.9 | 46.8 | 21.2 | 17.9 |
| SiO₂ | 31.1 | 27.9 | 28.3 | 52.9 | 45.4 | 69.4 | 2.4 | 31.7 | 28.4 | 27.7 |
| TiO₂ | 0.0 | 6.0 | 6.0 | 7.4 | 0.0 | 0.0 | 0.0 | 0.0 | 0.0 | 0.0 |
| ZrO₂ | 3.8 | 2.1 | 2.1 | 0.0 | 1.8 | 0.0 | 7.7 | 3.8 | 4.2 | 4.2 |
| Li₂0 | 5.6 | 3.4 | 4.7 | 8.8 | 4.3 | 0.0 | 0.0 | 4.6 | 6.8 | 7.1 |
| Na₂O | 3.2 | 2.6 | 0.0 | 4.8 | 0.0 | 10.5 | 0.0 | 5.1 | 1.4 | 0.7 |
| K₂O | 2.0 | 11.7 | 11.8 | 1.5 | 0.0 | 6.3 | 0.0 | 1.0 | 0.6 | 1.1 |
| BaO | 0.0 | 0.0 | 0.0 | 0.0 | 0.2 | 3.1 | 0.0 | 0.0 | 0.0 | 0.0 |
| ZnO | 0.0 | 0.0 | 0.0 | 0.0 | 0.4 | 0.0 | 5.9 | 0.0 | 6.5 | 6.4 |
| La₂O₃ | 10.1 | 0.0 | 0.0 | 0.0 | 0.0 | 0.0 | 44.3 | 0.0 | 14.9 | 18.3 |
| P₂O₅ | 0.0 | 0.0 | 0.0 | 0.0 | 0.0 | 0.0 | 0.0 | 0.0 | 0.0 | 0.0 |
| B₂O₃ | 1.4 | 0.0 | 0.0 | 0.0 | 22.2 | 10.8 | 36.7 | 2.2 | 9.6 | 9.4 |
| MgO | 0.4 | 0.0 | 0.0 | 0.0 | 0.4 | 0.0 | 0.0 | 0.0 | 0.0 | 0.0 |
| CaO | 0.0 | 0,0 | 0.0 | 0.0 | 7.1 | 0.0 | 0.0 | 0.0 | 0.0 | 0.6 |
| SrO | 0.0 | 0.0 | 0.0 | 0.0 | 15.9 | 0.0 | 0.0 | 0.0 | 1.2 | 0.0 |
| Al₂O₃ | 1.1 | 0.0 | 0.0 | 0.0 | 2.3 | 0.0 | 0.0 | 0.0 | 0.0 | 0.0 |
| Y₂O₃ | 0.0 | 0.0 | 0.0 | 0.0 | 0.0 | 0.0 | 0.0 | 0.0 | 5.2 | 2.5 |
| WO₃ | 0.0 | 0.0 | 0.0 | 0.0 | 0.0 | 0.0 | 0.0 | 4.8 | 0.0 | 0.0 |
| Bi₂O₃ | 0.0 | 0.0 | 0.0 | 0.0 | 0.0 | 0.0 | 0.0 | 0.0 | 0.0 | 0.0 |
| Gd₂O₃ | 0.0 | 0.0 | 0.0 | 0.0 | 0.0 | 0.0 | 2.2 | 0.0 | 0.0 | 4.1 |
| F | 0.0 | 0.0 | 0.0 | 0.0 | 0.0 | 0.0 | 0.0 | 0.0 | 0.0 | 0.0 |
| Ln₂O₃ | 10.1 | 0.0 | 0.0 | 0.0 | 0.0 | 0.0 | 46.4 | 0.0 | 20.1 | 24.9 |
| Li₂O/(Li₂O+Na₂O+K₂O) | 0.52 | 0.19 | 0.28 | 0.58 | 1.00 | 0.00 | | 0.43 | 0.77 | 0.80 |
| Na₂O/(Li₂O+Na₂O+K₂O) | 0.30 | 0.15 | 0.00 | 0.32 | 0.00 | 0.62 | | 0.48 | 0.16 | 0.08 |
| Li₂O+Na₂O+K₂O | 10.7 | 17.6 | 16.5 | 15.0 | 4.3 | 16.8 | 0.0 | 10.7 | 8.8 | 8.9 |
| Li₂O+Na₂O | 8.8 | 6.0 | 4.7 | 13.6 | 4.3 | 10.5 | 0.0 | 9.7 | 8.2 | 7.8 |
| Nb₂O₅-(La₂O₃+BaO) | 31.2 | 46.4 | 47.0 | 24.6 | -0.2 | -3.1 | -43.4 | 46.8 | 6.3 | |
| (Nb₂O₅-(La₂O₃+BaO))× Li₂O/(Li₂O+Na₂O+K₂O) | 16.2 | 8.9 | 13.4 | 14.4 | -0.2 | 0.0 | | 20.1 | 4.9 | |
| (Li₂O+Na₂O+K₂O)/Ln₂O₃ | | | | | | | 0.0 | | | 0.4 |
| n_{d} | 1.77 | 1.80 | 1.81 | 1.67 | 1.59 | 1.51 | 1.77 | 1.79 | 1.74 | 1.73 |
| Tg (°C) | 537 | 564 | 569 | 526 | 554 | 684 | 669 | 576 | 529 | 524 |
| Devitrification temperature (°C) | 1150 | | 1050 | 1030 | | | | 1100 | 1150 | 1160 |
| E (GPa) | 109 | 94 | 94 | 96 | 83 | 129 | 105 | 103 | 112 | 109 |
| Specific gravity (g/cm³) | 3.42 | 3.32 | 3.31 | 2.86 | 2.5 | 4.3 | 3.0 | 3.38 | 3.46 | 3.51 |
| CIL (gf) (not strengthened) | 17 | | | | 27 | 17 | 38 | | | |
| CIL (gf) (condition 1) | | 35 | 51 | 143 | 27 | 28 | 39 | | | |
| CIL (gf) (condition 2) | 100 | 40 | 50 | | 29 | 40 | 23 | 111 | 156 | 182 |
| CIL (gf) (condition 3) | 83 | 60 | 70 | 268 | | | | | | |
| CIL (gf) (condition 4) | | | | | | | | | | |
| DOL(µm) | 30 to 200 | 30 to 200 | 30 to 200 | 30 to 200 | 0 | 0 | 0 | 30 to 200 | 30 to 200 | 30 to 200 |
| T₃₆₀ (%) | 80 | | | 80 | | | | | | |
| RA (class) | 1 | | | | 1 | 3 | 4 | 1 | | |
| RW (class) | 1 | | | | 2 | 1 | 2 | 1 | | |
| Scratch resistance (gf) | >1000 | <100 | <100 | <100 | <100 | <100 | <100 | >200 | >200 | >200 |

Each of the optical glasses of the examples has the refractive index (nd) as high as 1.73 or more. In addition, each of the optical glasses of Examples 1 to 46, 53 to 55 has high strength with the scratch resistance of 200 gf or more. Accordingly, it is suitable for an imaging lens or the like used for a vehicle-mounted camera which is exposed to harsh environment. Further, the optical glass of the present invention enables a wide-angle, high-luminance, high-contrast, and improvement in light-guide properties of a device and a lens or a height of a diffraction grating is designed to be low to make processing easy while securing strength. The optical glass of the present invention is therefore suitable for use for an action camera, a wearable device, an optical waveguide, a glass with projector, an optical waveguide with hologram, a glass with hologram, a waveguide reflector array projector, a glass with diffractive optical elements, a virtual reality and augmented reality display device, an HMD device, a goggle-type display, a glasses-type display, a virtual image display device, and so on.

## Claims

1. An optical glass, comprising:
a strengthened layer at a surface layer, wherein
a depth of the strengthened layer is 1 µm or more from a surface of the optical glass, and
a refractive index (nd) of the optical glass is 1.73 to 2.10.

2. The optical glass according to claim 1, wherein
a scratch resistance of the optical glass is 200 gf or more.

3. The optical glass according to claim 1 or claim 2, wherein, in mass% based on oxides in a glass inside of the optical glass,
Li₂O +Na₂O is 5% or more,
Li₂O + Na₂O + K₂O is 5% to 20%, and
Li₂0 / (Li₂O + Na₂O + K₂O) or Na₂O / (Li₂O + Na₂O + K₂O) is 0.20 or more.

4. The optical glass according to any one of claims 1 to 3, wherein
a glass transition point (Tg) is 520°C to 600°C, and a devitrification temperature is 1300°C or less.

5. The optical glass according to claim 3 or claim 4, wherein the glass inside of the optical glass contains, in mass% based on oxides:
Nb₂O₅: 20% to 75%;
SiO₂: 10% to 50%;
TiO₂: 0% to 20%;
ZrO₂: 0% to 20%;
Li₂O: 0% to 20%;
Na₂O: 0% to 20%;
K₂O: 0% to 10%;
BaO: 0% to 20%;
ZnO: 0% to 15%;
Ln₂O₃: 0% to 50%;
La₂O₃: 0% to 50%;
Y₂O₃: 0% to 20%;
P₂O₅: 0% to 20%; and
B₂O₃: 0% to 20%, and
a crack initiation load (CIL) of the optical glass is 100 gf or more.

6. The optical glass according to claim 5, wherein
the ZnO content is 0% to 10%.

7. The optical glass according to claim 5 or claim 6, wherein
Nb₂O₅ - (La₂O₃ + BaO) is 30% to 75% in the glass inside of the optical glass.

8. The optical glass according to any one of claims 5 to 7, wherein
(Nb₂O₅ - (La₂O₃ + BaO)) × Li₂O / (Li₂O + Na₂O + K₂O) is 20 or more in the glass inside of the optical glass.

9. The optical glass according to claim 3 or claim 4, wherein the glass inside of the optical glass contains, in mass% based on oxides:
La₂O₃: 10% to 70%;
B₂O₃: 10% to 40%;
Nb₂O₅: 0% or more and less than 20%;
SiO₂: 0% to 30%;
TiO₂: 0% to 20%;
ZrO₂: 0% to 20%;
Li₂O: 0% to 20%;
Na₂O: 0% to 20%;
K₂O: 0% to 10%;
CaO: 0% to 20%;
BaO: 0% to 20%;
ZnO: 0% to 40%;
Ln₂O₃: 10% to 70%; and
P₂O₅: 0% to 20%, and
a crack initiation load (CIL) of the optical glass is 40 gf or more.

10. The optical glass according to claim 9, wherein
(Li₂O + Na₂O + K₂O)/ Ln₂O₃ is 0.2 or more in the glass inside of the optical glass.

11. The optical glass according to any one of claims 1 to 10, wherein
water resistance of the optical glass is class 3 or more, and acid resistance of the optical glass is class 3 or more each measured based on JOGIS06-2008 according to Japanese Optical Glass Industrial Standards.
